# DEMANDE DE BREVET EUROPEEN

(11) **EP 3 835 108 A1**
(43) Date de publication de la demande: **16.06.2021**
(21) Numéro de dépôt: 20212734.6
(22) Date de dépôt: 09.12.2020
(51) Int. Cl.: B60L 5/26

(54) **PANTOGRAPHE POUR VOITURE D'UN MATÉRIEL ROULANT ADAPTÉ POUR CAPTER DU COURANT D'UNE LIGNE D'ALIMENTATION ÉLECTRIQUE**

(30) Priorité: 10.12.2019 FR 1914026
(71) Demandeur: SNCF Réseau, 93200 Saint-Denis (FR)
(72) Inventeur: DUBOIS, Samuel, 59800 Lille (FR)
(74) Mandataire: Fache, Sébastien

(57) **Abrégé**

L'invention porte principalement sur un pantographe adapté pour capter du courant électrique d'une ligne d'alimentation électrique pour matériel roulant, comprenant un bâti (2) adapté pour être fixé sur un matériel roulant, un système articulé (3) s'étendant depuis le bâti (2) entre une position repliée et une position déployée selon une direction dite de déploiement (Z), et une tête de captage (4), le pantographe (1) comprenant en outre une première bielle (10) dite anti-balançante dont les extrémités (100, 101) sont respectivement reliées au système articulé (3) et à la tête de captage (4), caractérisé en ce que le pantographe (1) comprend au moins une seconde bielle (11) dite anti-balançante dont les extrémités (110, 111) sont respectivement reliées au système articulé (3) et à la tête de captage.

## Description

### DOMAINE TECHNIQUE

L'invention se situe dans le domaine des lignes d'alimentation électrique aériennes, également appelées lignes aériennes de traction électriques.

L'invention porte sur un pantographe adapté pour capter du courant d'un fil de contact pour ligne d'alimentation électrique de matériels roulant.

### ART ANTERIEUR ET INCONVENIENTS DE L'ART ANTERIEUR

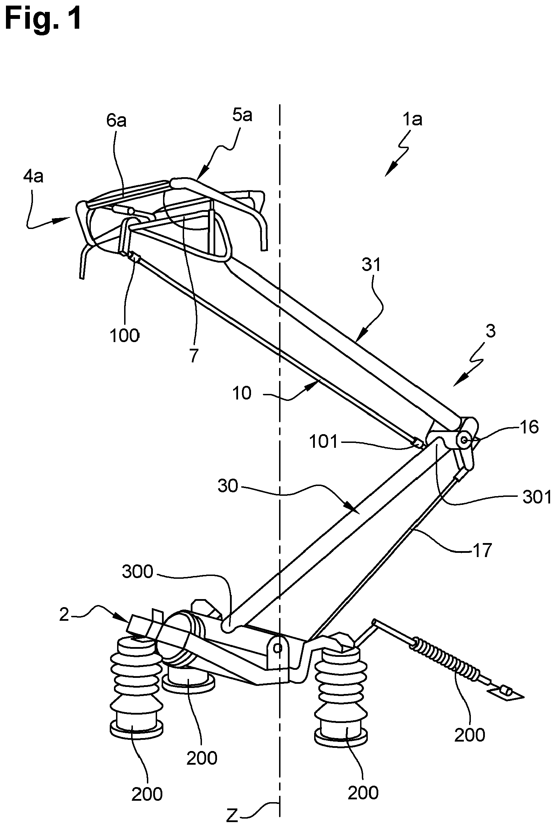

De manière connue, les lignes d'alimentation électrique de matériels ferroviaires roulant comprennent au moins un fil conducteur suspendu au-dessus de la voie et s'étendant selon une direction longitudinale, lequel fil conducteur est couramment appelé fil de contact caténaire. Un courant électrique circule dans ce fil de contact pour alimenter en énergie électrique le matériel ferroviaire roulant circulant sur la voie. Pour capter ce courant, le matériel ferroviaire comprend au moins un pantographe 1a représenté sur la figure 1, qui comprend un bâti 2 fixé sur le matériel ferroviaire roulant, un système articulé 3 s'étendant depuis le bâti 2 selon une direction dite de déploiement Z entre une position repliée et une position déployée en contact avec le fil de contact, et une tête de captage 4a s'étendant selon une direction transversale Y perpendiculaire à la direction longitudinale du fil de contact et à la direction de déploiement Z du pantographe, laquelle tête de captage 4a comprend au moins un archet 5a muni traditionnellement de deux bandes de frottement 6a au fil de contact lorsque le système articulé 3 est déployé.

Pour assurer un contact permanent entre les bandes de frottement 6a et le fil de contact, le pantographe 1a doit résister aux sollicitations sans subir de déformations mécaniques. La tête de captage 4a comprend un arbre transversal 7 dit anti-balançant, positionné entre les bandes de frottement ; celui-ci présente une rigidité suffisante pour maîtriser la position de la tête de captage 4a. En outre, pour maintenir la tête de captage 4a dans sa position parallèle par rapport au plan dans lequel s'étendent les rails, le pantographe comprend également une première bielle 10 reliée à la tête de captage 4a et au système articulé 3. Cette bielle est communément appelée bielle anti-balançante 10, ou encore tube anti-balançant. Cette bielle anti-balançante 10 est déportée sur un côté du pantographe, pour éviter l'interférence mécanique avec le bâti 2 lorsque le pantographe est replié.

Cette solution présente néanmoins des inconvénients car le poids de la tête de captage 4a est limité par le fait que la bielle anti-balançante 10 est déportée sur un côté du pantographe. Or, il est parfois nécessaire d'ajouter des éléments sur la tête de captage 4a, par exemple pour réaliser des mesures. L'ajout de tels éléments, qui plus est en porte-à-faux, sur la tête de captage d'un pantographe connu 1a induit une déformation notable (flexion en torsion) de l'arbre anti-balançant 7 dudit pantographe 1a, du fait du déport de la bielle anti-balançante 10. Cette déformation est préjudiciable à la maîtrise de la position de l'instrumentation et donc à la qualité de la mesure.

Une solution serait de renforcer la rigidité de l'arbre transversal anti-balançant 7, mais cette solution augmente fortement la masse embarquée, ce qui serait préjudiciable au comportement dynamique du pantographe, et limiterait encore plus la charge que l'on peut embarquer pour l'instrument de mesure.

### OBJECTIF DE L'INVENTION

L'invention vise donc à proposer un pantographe au comportement aérodynamique et au comportement dynamique améliorés, sans augmentation significative de son poids.

### EXPOSE DE L'INVENTION

À cet effet, l'invention vise un pantographe adapté pour capter du courant électrique d'une ligne d'alimentation électrique pour matériel roulant, comprenant un bâti adapté pour être fixé sur un matériel roulant, un système articulé s'étendant depuis le bâti selon une direction dite de déploiement entre une position repliée et une position déployée, et une tête de captage, le pantographe comprenant en outre une première bielle dite anti-balançante dont les extrémités sont respectivement reliées au système articulé et à la tête de captage, caractérisé en ce que le pantographe comprend au moins une seconde bielle dite anti-balançante dont les extrémités sont respectivement reliées au système articulé et à la tête de captage.

Le pantographe peut également comporter les caractéristiques optionnelles suivantes considérées isolément ou selon toutes les combinaisons techniques possibles :
- La tête de captage comprend :
   au moins un arbre transversal dit anti-balançant relié au système articulé, et
   un système de mesure relié à l'arbre anti-balançant et comportant au moins un capteur de paramètre de la caténaire,
   la première bielle étant reliée à l'arbre anti-balançant, et la seconde bielle étant reliée au système de mesure.
- La tête de captage comprend au moins un archet muni d'une bande de frottement et supporté par l'arbre transversal anti-balançant.
- La seconde bielle est reliée à un châssis du système de mesure, lequel châssis est articulé sur l'arbre anti-balançant.
- La première bielle est reliée de manière articulée au voisinage d'une extrémité de l'arbre anti-balançant, et en ce que la seconde bielle est reliée de manière articulée à une partie du châssis du système de mesure qui est articulé au voisinage de l'extrémité opposée dudit arbre anti-balançant, de sorte qu'au moins une partie du bâti soit située entre les deux bielles anti-balançantes lorsque le système articulé est en position repliée.
- Au moins la seconde bielle anti-balançante est courbée au niveau d'une portion située au voisinage de la partie du bâti lorsque le système articulé est en position repliée.
- Les deux bielles anti-balançante sont disposées de part et d'autre du système articulé.
- Les liaisons articulées des deux bielles anti-balançantes au système articulé sont coaxiales, et les liaisons articulées des deux bielles anti-balançantes à la tête de captage sont coaxiales.
- La première bielle anti-balançante est reliée de manière articulée à l'arbre anti-balançant par une biellette de fixation solidaire dudit arbre anti-balançant.

L'invention vise également une voiture d'un matériel roulant, comprenant au moins un pantographe tel que décrit précédemment.

L'invention vise enfin un matériel roulant comprenant au moins une voiture tel que décrite précédemment.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue en perspective d'un pantographe de l'art antérieur en position déployée ;
[Fig. 2] La figure 2 représente une vue en perspective d'un pantographe de l'invention en position déployée ;
[Fig. 3] La figure 3 représente une vue en perspective de la tête de captage du pantographe de la figure 2 ;
[Fig. 4] La figure 4 est une vue en perspective d'un détail de la tête de captage de la figure 3, illustrant la liaison d'une première bielle anti-balançante à un arbre transversal ;
[Fig. 5] La figure 5 représente une vue en perspective d'un autre détail de la tête de captage de la figure 3, illustrant la liaison d'une seconde bielle anti-balançante à un arbre transversal.

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

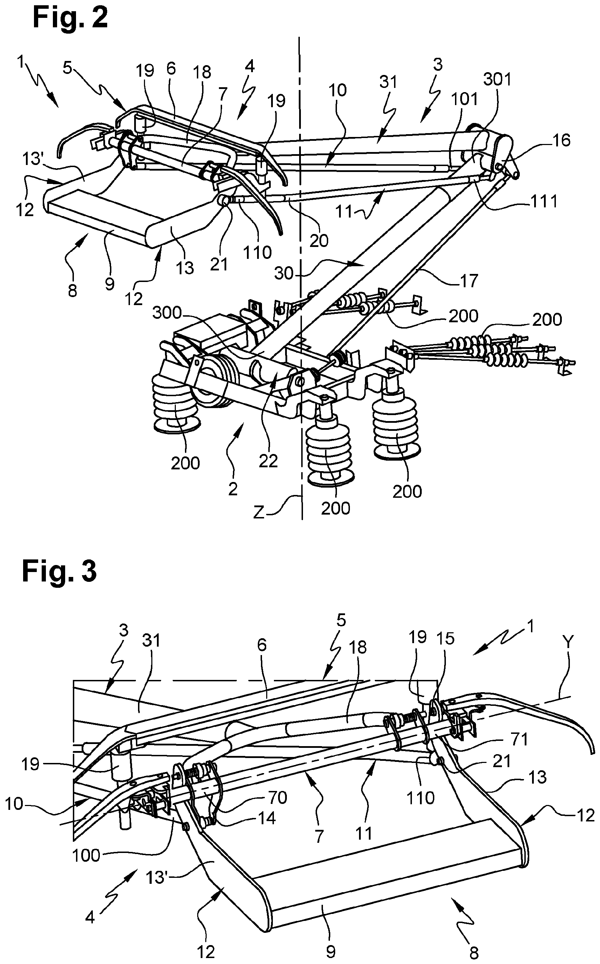

Par rapport au pantographe connu de la figure 1, le pantographe de l'invention représenté sur les figures 2 à 5 diffère essentiellement par sa tête de captage 4. En d'autres termes, le bâti 2, le système articulé 3 et la première bielle anti-balançante 10 sont identiques pour le pantographe 1a de l'art antérieur et le pantographe 1 de l'invention.

La figure 2 représente un pantographe 1 comprenant un bâti 2, un système articulé 3 qui s'étend à partir du bâti 2 selon une direction de déploiement Z perpendiculaire à une direction longitudinale du fil de contact, et une tête de captage 4 s'étendant selon une direction transversale Y perpendiculaire à la direction de déploiement Z et à la direction longitudinale du fil de contact. Le bâti 2 est conçu pour être fixé sur une toiture d'une voiture d'un matériel roulant (non représenté), par exemple un matériel roulant ferroviaire, et pour supporter le système articulé 3 et la tête de captage 4. Le bâti 2 est fixé à la toiture de la voiture au moyen de plusieurs pieds isolateurs 200.

Le système articulé 3 comprend un bras inférieur 30 dont l'une des extrémités 300 est fixée au bâti 2 et l'autre extrémité 301 est reliée à un bras supérieur 31 au moyen d'une d'articulation telle qu'une liaison pivot 16. Le système articulé 3 comprend également une tringle inférieure 17 qui s'étend le long du bras inférieur 30 et qui est fixée par l'une de ses extrémités au bâti 2 et par son autre extrémité au niveau de l'articulation 16 du système articulé 3.

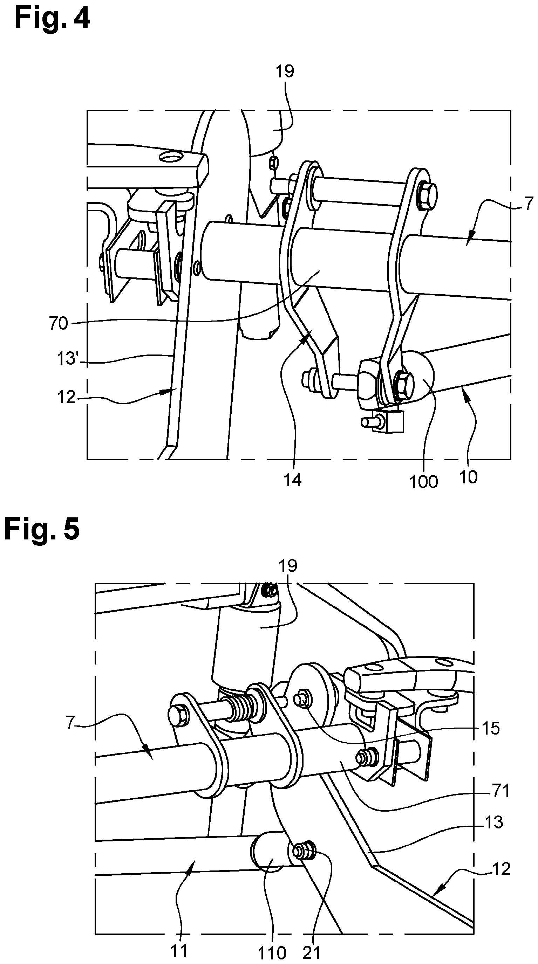

Le système articulé 3 comprend d'autre part une première bielle de positionnement communément nommée bielle anti-balançante 10 ou encore tube anti-balançant qui s'étend le long du bras supérieur 31 et qui permet de maintenir la tête de captage 4 stable. Ce premier tube anti-balançant 10 est monté à pivotement par l'une de ses extrémités 101 sur le bras 30 à proximité de l'articulation 16 du système articulé 3 et par son autre extrémité 100 à la tête de captage 4, et plus précisément à une biellette 14 solidaire d'un arbre support 7 dit arbre anti-balançant. Cet arbre anti-balançant 7 est monté à pivotement au bras supérieur 31 du système articulé 3 au moyen de pattes de liaison 18. Le premier tube anti-balançant 10 est en outre relié au voisinage d'une extrémité 70 de l'arbre anti-balançant 7 (figure 4).

En référence à la figure 3, la tête de captage 4 comprend un archet 5 pourvu d'une bande de frottement 6, lequel archet 5 est sensiblement recourbé au niveau de ses extrémités et est relié à l'arbre anti-balançant 7 au moyen de suspensions 19.

La tête de captage 4 comprend en outre un système de mesure 8 comprenant un ensemble de capteurs 9 destinés à mesurer des paramètres de la caténaire, par exemple la géométrie du fil de contact, sa résistance aux chocs ou encore son degré d'usure qui se traduit directement par un retrait de matière et donc par une diminution de l'épaisseur du fil de contact. La bande de frottement 6 est en outre déportée à l'opposé dudit système de mesure 8.

L'ensemble de capteurs 9 est enserré entre deux plaques planes recourbées 13, 13' formant le châssis 12 du système de mesure 8, lequel châssis 12 est solidaire de l'arbre anti-balançant (7). Dans un mode de réalisation alternatif non représenté, l'instrumentation dépasse de l'espace délimité entre les plaques 13, 13'.

Plus précisément, l'une des plaques 13' est reliée à l'extrémité 70 de l'arbre anti-balançant 7, au voisinage de la biellette 14 reliée à pivotement au premier tube anti-balançant 10, et l'autre plaque 13 est articulée à l'extrémité opposée 71 de l'arbre anti-balançant 7 au moyen d'une liaison pivot 15 (figures 3 et 5).

Selon l'invention et en référence aux figures 2, 3 et 5, le pantographe 1 comprend une seconde bielle anti-balançante 11 dite second tube anti-balançant, qui s'étend le long du bras supérieur 31 et qui est monté à pivotement par l'une de ses extrémités 111 sur le bras 30 au voisinage de l'articulation 16 du système articulé 3 et par son autre extrémité 110 à la tête de captage 4. La présence de ce second tube anti-balançant 11 permet de renforcer encore la stabilité de la tête de captage 4 et du pantographe 1. Par ailleurs, l'ajout de ce second tube anti-balançant 11 permet l'installation d'une tête de captage 4 plus massive, et cela sans occasionner de déformation par torsion de l'arbre anti-balançant 7 comme cela se produirait avec un unique tube anti-balançant. De nombreux capteurs 9 peuvent ainsi être installés dans le système de mesure 8, avec une grande précision de positionnement, pour garantir la précision de mesure relative à la caténaire.

Plus précisément, le second tube anti-balançant 11 est relié par une liaison pivot 21 à la plaque 13 du châssis 12 du système de mesure 8, à proximité de l'extrémité

71 de l'arbre anti-balançant 7. Ainsi, en ne reliant pas le second tube anti-balançant 11 directement à l'arbre anti-balançant 7, tout montage hyperstatique du pantographe 1 est évité grâce à la liaison pivot 15 et à la flexibilité relative du système de mesure 8 compensée par le deuxième tube anti-balançant 11. Cette disposition globale permet ainsi de ne pas nécessiter de renforcer fortement l'arbre anti-balançant 7 et le châssis 12 du système de mesure 8, ce qui aurait pour effet d'augmenter fortement la masse dynamique au détriment de la quantité d'instruments embarqués.

D'autre part, les premier et second tubes anti-balançant 10, 11 étant disposés de part et d'autre du bras supérieur 31 et reliés au voisinage des extrémités de la tête de captage 4, lesdits tubes 10, 11 sont positionnés de part et d'autre d'une partie du bâti 22 lorsque le pantographe 1 est en position repliée. De la sorte, l'encombrement du pantographe 1 en position repliée selon la direction de déploiement Z reste limité.

En outre, les liaisons articulées des premier et second tubes anti-balançant 10, 11 au bras 30 du système articulé 3 sont coaxiales, tandis que les liaisons articulées des premier et second tubes anti-balançant 10, 11 au châssis 12 du système de mesures 8 sont également coaxiales. De la sorte, le comportement dynamique du pantographe 1 est encore amélioré.

Enfin, pour encore faciliter le positionnement de la partie du bâti 2 entre les deux tubes anti-balançant 10, 11, l'un des deux tubes, préférentiellement le second tube anti-balançant 11, est courbé au niveau d'une portion 20 située au voisinage de la partie de bâti 22 lorsque le pantographe 1 est dans sa position repliée.

## Revendications

1. Pantographe (1) adapté pour capter du courant électrique d'une ligne d'alimentation électrique pour matériel roulant, comprenant un bâti (2) adapté pour être fixé sur un matériel ferroviaire roulant, un système articulé (3) s'étendant depuis le bâti (2) selon une direction dite de déploiement (Z) entre une position repliée et une position déployée, et une tête de captage (4), le pantographe (1) comprenant en outre une première bielle (10) dite anti-balançante dont les extrémités (100, 101) sont respectivement reliées au système articulé (3) et à la tête de captage (4), le pantographe (1) comprenant en outre au moins une seconde bielle (11) dite anti-balançante dont les extrémités (110, 111) sont respectivement reliées au système articulé (3) et à la tête de captage (4), **caractérisé en ce que** la tête de captage (4) comprend :
• au moins un arbre transversal (7) dit anti-balançant relié au système articulé (3), et
• un système de mesure (8) relié à l'arbre anti-balançant (7) et comportant au moins un capteur (9) de paramètre de la caténaire,
**en ce que** la première bielle (10) est reliée à l'arbre anti-balançant (7), et **en ce que** la seconde bielle (11) est reliée au système de mesure (8).

2. Pantographe selon la revendication précédente, **caractérisé en ce que** la seconde bielle (11) est reliée à un châssis (12) du système de mesure (8), lequel châssis (12) est articulé sur l'arbre anti-balançant (7).

3. Pantographe (1) selon la revendication précédente, **caractérisé en ce que** la première bielle (10) est reliée de manière articulée au voisinage d'une extrémité (70) de l'arbre anti-balançant (7), et **en ce que** la seconde bielle (11) est reliée de manière articulée à une partie du châssis (13) du système de mesure (8) qui est articulée au voisinage de l'extrémité opposée (71) dudit arbre anti-balançant (7), de sorte qu'au moins une partie du bâti (22) soit située entre les deux bielles anti-balançantes (10, 11) lorsque le système articulé (3) est en position repliée.

4. Pantographe (1) selon la revendication précédente, **caractérisé en ce qu'**au moins la seconde bielle anti-balançante (11) est courbée au niveau d'une portion située au voisinage de la partie du bâti (22) lorsque le système articulé (3) est en position repliée.

5. Pantographe (1) selon l'une quelconque des revendications précédentes, **caractérisé en ce que** la première bielle anti-balançante (10) est reliée de manière articulée à l'arbre anti-balançant (7) par une biellette de fixation (14) solidaire dudit arbre anti-balançant (7)

6. Pantographe selon l'une quelconque des revendications précédentes, **caractérisé en ce que** les deux bielles anti-balançantes (10, 11) sont disposées de part et d'autre du système articulé (3).

7. Pantographe selon la revendication précédente, **caractérisé en ce que** les liaisons articulées des deux bielles anti-balançantes (10, 11) au système articulé (3) sont coaxiales, et **en ce que** les liaisons articulées des deux bielles anti-balançantes (10, 11) à la tête de captage (4) sont coaxiales.

8. Voiture d'un matériel roulant, comprenant au moins un pantographe (1) selon l'une quelconque des revendications 1 à 7.

9. Matériel roulant comprenant au moins une voiture selon la revendication 8.
